# EUROPEAN PATENT SPECIFICATION

(11) **EP 1 903 195 B1**
(45) Date of publication and mention of the grant of the patent: **11.01.2017**
(21) Application number: 07018379.3
(22) Date of filing: 19.09.2007
(51) Int. Cl.: F02B 61/02, F02B 27/02

(54) **Intake control device and change condition setting method**
Einlasssteuerungsvorrichtung und Verfahren zur Einstellung von Wechselkonditionen
Dispositif de contrôle d'admission et procédé de réglage de condition de changement

(30) Priority: 20.09.2006 JP 2006255050
(43) Date of publication of application: 26.03.2008
(73) Proprietor: Yamaha Hatsudoki Kabushiki Kaisha, Iwata-shi, Shizuoka 438-8501 (JP)
(72) Inventor: Fujiwara, Hideki, Iwata-shi Shizuoka-ken 438-8501 (JP); Someya, Akira, Iwata-shi Shizuoka-ken 438-8501 (JP)
(74) Representative: Grünecker Patent- und Rechtsanwälte PartG mbB

(56) References cited:
- EP-A1- 1 655 484
- JP-A- S6 325 314
- JP-A- 2002 054 444
- JP-A- 2004 270 507
- US-A- 4 565 166
- US-A- 4 608 948
- US-A- 4 890 586
- US-A- 5 704 328

## Description

The present invention relates to an intake control device according to the preamble of independent claim 1 which changes a length of an intake conduit to vary an output characteristic of the engine, to a straddle type vehicle having same, and to a method of setting the condition for changing the length of the intake conduit according to the preamble of independent claim 5. Such an intake control device and a method of setting the condition for changing the length of the intake conduit can be taken from the prior art document US 4 565 166 A or EP 1655 484 A1.

Conventionally, as one of intake control devices mounted to straddle type vehicles such as, for example, motorcycles, there is a device in which a length of an intake conduit is changed from a predetermined length to a length shorter than the predetermined length when an engine load (such as, for example, an engine speed or a throttle valve opening) reaches a predetermined threshold value; thereby, an output characteristic of the engine varies (for example, JP 09-100720 A). This makes it possible to obtain high intake efficiency over a wide range of engine speed.

However, there can be a drawback that the conventional intake control device affords no comfortable ride feelings because the output torque of the engine changes abruptly at the moment the intake conduit length is changed.

The present invention has been made in view of the above problem to provide an intake control device, a straddle type vehicle, and a method of setting the condition for changing the intake conduit length, which allow comfortable driving even when the intake conduit length is changed.

According to the present invention said object is solved by an intake control device having the features of independent claim 1, a straddle type vehicle according to claim 4, and a method of setting the condition for changing the intake conduit length having the features of independent claim 5. Preferred embodiments are laid down in the dependent claims.

For the apparatus aspect, it is provided an intake control device for an engine of a vehicle comprising a change control means for changing a length of an intake conduit from a first length to a second length shorter than the first length, and from the second length to the first length, according to whether or not an engine speed has reached a predetermined threshold value, wherein the threshold

value applied by the change control means has been predetermined on the basis of an engine output torque in the state of the intake conduit set to the first length and an engine output torque in the state of the intake conduit set to the second length.

Preferably, the threshold value has been predetermined on the basis of an engine speed, at which the engine output torque in the state of the intake conduit set to the first length is equal to the engine output torque in the state of the intake conduit set to the second length.

The Intake control device further comprises a throttle valve opening detecting means for detecting the throttle valve opening, wherein the threshold value has been predetermined to correspond to a throttle valve opening, and wherein the change control means is configured to change the length of the intake conduit between the first length and the second length depending on whether or not the engine speed has reached the threshold value determined based on the throttle valve opening detected with the throttle valve opening detecting means.

Preferably, the threshold value is predetermined on the basis of the engine speed of the moment at which the engine output torque measured corresponding to the engine speed in the state of the length of the intake conduit set to the first length is equal to the engine output torque measured corresponding to the engine speed in the state of the length of the intake conduit set to the second length.

Further, preferably a straddle type vehicle is provided with the intake control device according to one of the above embodiments.

For the method aspect, it is provided a method of setting a condition for changing a length of an intake conduit in an intake device for an engine of a vehicle between a first length and a second length shorter than the first length or vice versa, the method comprising: a first measuring step of measuring an engine output characteristic corresponding to the engine speed in the state of the length of the intake conduit set to the first length; a second measuring step of measuring the

engine output characteristic corresponding to the engine speed in the state of the length of the intake conduit set to the second length; a threshold value determining step of determining the threshold value for an engine speed on the basis of the engine output characteristic measured in the first measuring step and the engine output characteristic measured in the second measuring step; and a setting step of setting at least the engine speed reaching the threshold value as a condition for changing the length of the intake conduit.

Preferably, the threshold value determining step obtains the engine speed at which the engine output torque in the state of the length of the intake conduit set to the first length is equal to the engine output torque in the state of the length of the intake conduit set to the second length, and determines the threshold value on the basis of the obtained engine speed.

Further, the first and second measuring steps, the threshold value determining step, and the setting step are repeated for several throttle opening degrees to make the threshold value dependent on changing throttle opening degrees during use of the Intake control device of one of the above embodiments.

In the following, the present invention is explained in greater detail with respect to several embodiments thereof in conjunction with the accompanying drawings, wherein:
- FIG. 1: is a side elevational view of a motorcycle to which an intake control device according to one embodiment is mounted,
- FIG. 2: is a schematic diagram showing structures of the intake control device and an engine,
- FIG. 3: is a schematic view showing an example of an intake conduit length varying mechanism. A movable conduit in the figure is connected to a fixed conduit,
- FIG. 4: is a schematic view showing the example of the intake conduit length varying mechanism. The movable conduit in the figure is spaced apart from the fixed conduit,
- FIG. 5: is a functional block diagram of a control section incorporated in the intake control device,
- FIG. 6: is an example table in which a throttle valve opening Th and an engine speed threshold value Nelim are stored in correspondence with each other,
- FIG. 7: is an example graph of relationship between engine speed and engine output torque (output characteristic). For example, Ne2 in the figure is set as engine speed threshold value Nelim,
- FIG. 8: is another example graph of relationship between engine speed and engine output torque (output characteristic). For example, Ne1 in the figure is set as engine speed threshold value Nelim, and
- FIG. 9: is a flowchart showing an example of processes implemented by the control section.

### Description of Reference Numerals and Symbols:

- 1:: motorcycle
- 3:: vehicle frame
- 4:: steering shaft
- 7:: air cleaner
- 8:: exhaust conduit
- 10:: intake control device
- 11:: control section
- 11a:: change control part (change control means)
- 11b:: determination processing part (determining means)
- 12:: storage section
- 13:: actuator drive circuit
- 14:: intake conduit length varying mechanism
- 21:: upper arm
- 22:: lower arm
- 23:: pillar
- 24:: arm
- 25:: coupling member
- 26:: actuator
- 27:: connecting member
- 30:: intake conduit
- 31:: movable conduit
- 32:: fixed conduit
- 47:: injector
- 48:: throttle position sensor (throttle valve opening detecting means)
- 49:: throttle body
- 50:: engine
- 51:: cylinder
- 52:: piston
- 53:: connecting rod
- 54:: crankshaft
- 55:: flywheel
- 56:: crankcase
- 57:: crank angle sensor
- A, B:: torque curves
- X:: disconnected position
- Y:: connected position
- L1:: length of connection (first length)
- L2:: length of disconnection (second length)
- Ne:: engine speed
- Nelim:: engine speed threshold value
- Th:: throttle valve opening

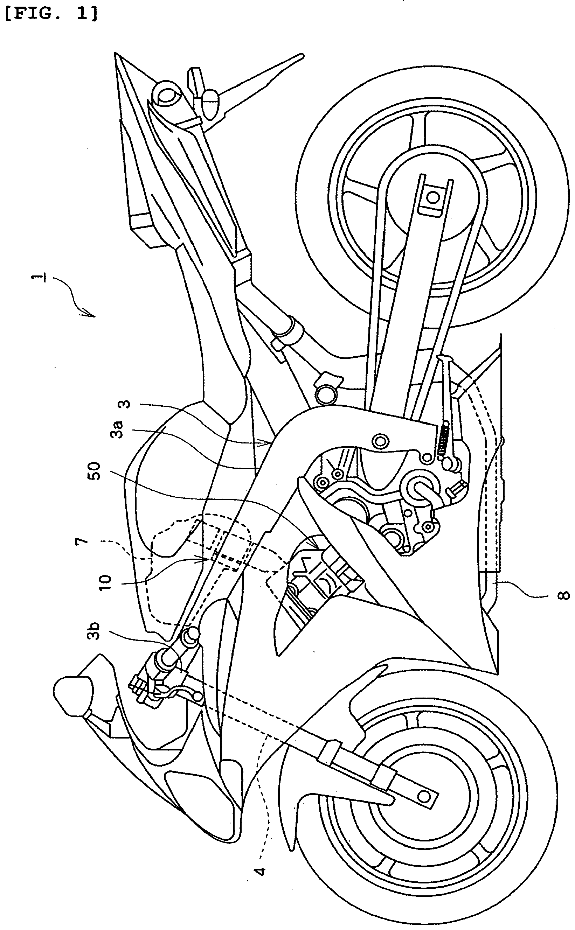

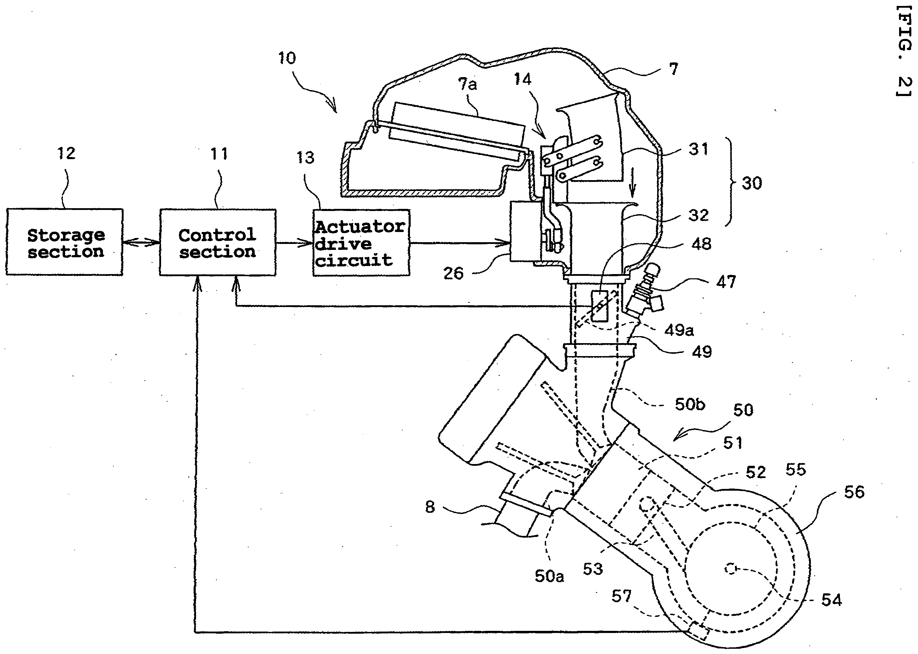

Hereunder, one embodiment will be described with reference to drawings. FIG. 1 is a side elevational view of a motorcycle 1 having an intake control device 10 mounted thereto, which is an example of the embodiment of the present teaching. FIG. 2 is a schematic diagram showing structures of the intake control device 10 and an engine 50.

As shown in FIG. 1, the motorcycle 1 has a vehicle frame 3 and the engine 50 other than the intake control device 10. Also, as shown in FIG. 2, the intake control device 10 includes a control section 11, a storage section 12, an actuator drive circuit 13 and an intake conduit length varying mechanism 14.

As shown in FIG. 1, the vehicle frame 3 includes a main frame 3a. A front end portion of the main frame 3a has a steering head section 3b supporting a steering shaft 4. The main frame 3a extends obliquely downward to the rear of the vehicle body from the steering head section 3b. The engine 50 is disposed below the main frame 3a.

As shown in FIG. 2, exhaust ports 50a are defined in the engine 50. Exhaust conduits 8 are connected to the respective exhaust ports 50a. Also, intake ports 50b are defined in the engine 50. Throttle bodies 49 are connected to the respective intake ports 50b. Fuel injectors 47 are attached to the respective throttle bodies 49 to inject fuel to intake passages of the throttle bodies 49. A throttle valve 49a is placed in the intake passage of each throttle body 49. A throttle valve position sensor 48 is attached to a lateral side of one throttle body 49 to detect a throttle valve opening. The throttle valve position sensor 48 outputs a voltage signal corresponding to the throttle valve opening to. the control section 11.

An air cleaner 7 is disposed above the engine 50. Air passing through a filter 7a of the air cleaner 7 and purified thereby flows into the throttle bodies 49. The air cleaner 7 contains intake conduits 30 through which the air flows to be delivered to the engine. Air introduced into the air cleaner 7 passes through the intake conduits 30 and flows into the throttle bodies 49. Additionally, as will be described later, each intake conduit 30 in this embodiment includes a fixed conduit 32 which is connected to the associated throttle body 49 and is fixed thereto, and a movable conduit 31 which is movable in a direction in which the movable conduit 31 is connected to the fixed conduit 32 or in another direction in which the movable conduit 31 is spaced apart from the fixed conduit 32. Because the movable conduit 31 is connected to the fixed conduit 32 or is spaced apart from the fixed conduit 32, the length of the passage of each intake conduit 30 through which the air flows can be changed. Thereby, the output characteristic of the engine 50 varies.

A cylinder 51 of the engine 50 contains a piston 52. A top end of a connecting rod 53 is coupled with the piston 52, while a bottom end thereof is coupled with a crankshaft 54. A flywheel 55 is mounted to the crankshaft 54. A crank angle sensor 57 is attached to the crankcase 56 to face an outer circumferential surface of the flywheel 55. The crank angle sensor 57 outputs pulse signals with a frequency corresponding to an engine speed. The control section 11 detects a rotational speed of the engine 50 (hereunder called "engine speed") based upon the frequency with which the signals are inputted.

As described above, the intake control device 10 includes the control section 11, the storage section 12, the actuator drive circuit 13 and the intake conduit length varying mechanism 14. The intake conduit length varying mechanism 14 is a mechanism which changes the length of the passage through which the air flows in the intake conduit 30 (hereunder called "intake conduit length"). As described above, in the example explained here, the intake conduit 30 includes the fixed conduit 32 and the movable conduit 31. Also, the intake conduit length varying mechanism 14 includes an actuator 26 which changes a position of the movable conduit 31 as well.

The movable conduit 31 moves relative to the fixed conduit 32 between a position where the movable conduit 31 is connected to the fixed conduit 32 and another position where the movable conduit 31 is spaced apart from the connected position. Thereby, the intake conduit length given when the movable conduit 31 is connected to the fixed conduit 32 (first length) is set longer than the intake conduit length given when the movable conduit 31 is spaced apart from the fixed conduit 32 (second length).

The actuator 26 is driven with the drive power supplied from the actuator drive circuit 13 to move the movable conduit 31.

The actuator drive circuit 13 supplies a drive current, which corresponds to the signal inputted from the control section 11, to the actuator 26.

The control section 11 includes the CPU (central processing unit) and controls various electrical components mounted to the vehicle body in accordance with programs stored in the storage section 12. Particularly, in this embodiment, the control section 11 moves the movable conduit 31 in accordance with an engine load (for example, an engine speed and a throttle valve opening) to execute processes for changing the intake conduit length. The processes executed by the control section 11 will be described later.

The storage section 12 includes non-volatile memory and volatile memory to hold programs executed by the control section 11. In this embodiment, particularly the storage section 12 holds the condition on which the control section 11 changes the intake conduit length. The change condition will be described later.

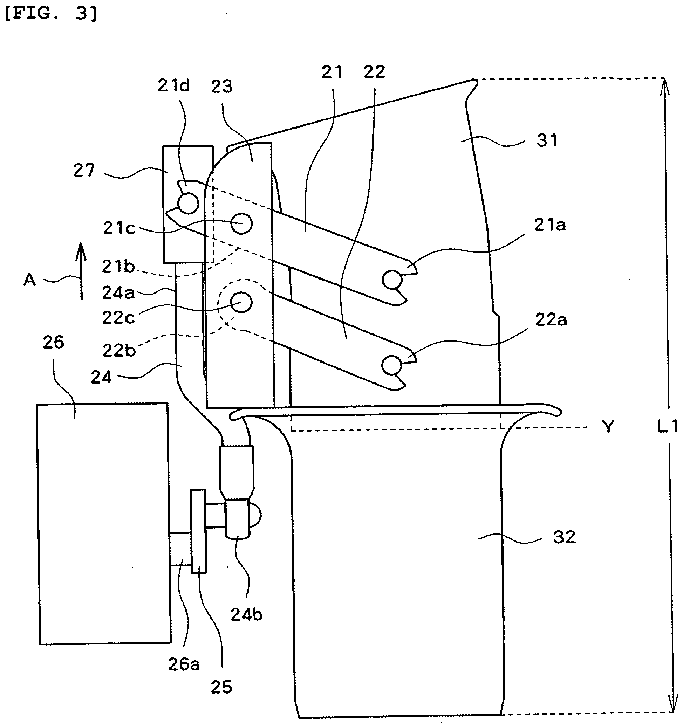

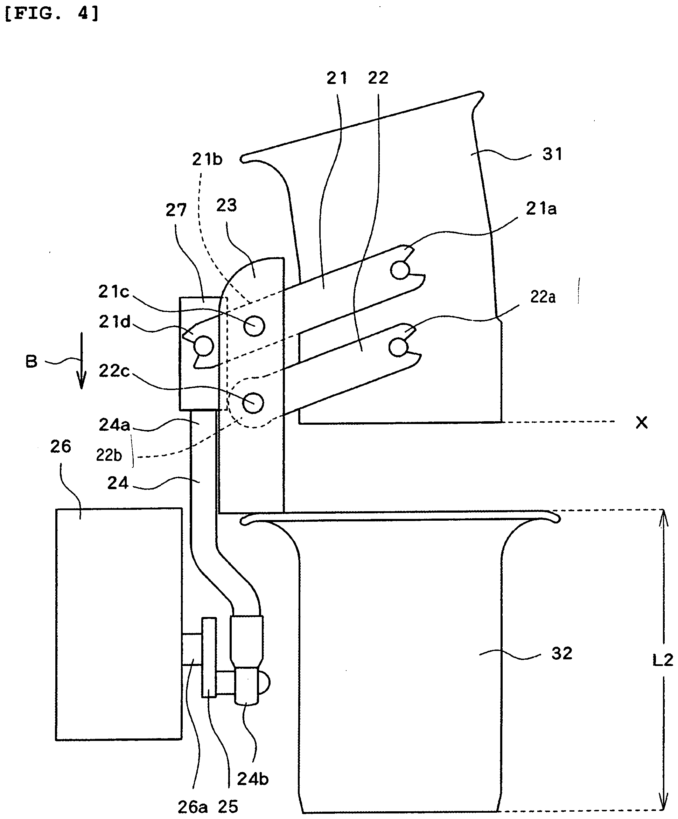

The example of the intake conduit length varying mechanism 14 will be described in detail below. FIGs. 3 and 4 are schematic views of the intake conduit length varying mechanism 14. Additionally, in the example shown in FIG. 3, the movable conduit 31 is placed at a position Y where the movable conduit 31 is connected to the fixed conduit 32 (hereunder called "connected position"). The movable conduit 31, in the example shown in FIG. 4, is placed at a position X where the movable conduit 31 is spaced apart from the fixed conduit 32 (hereunder called "disconnected position").

The movable conduit 31 is supported by one end 21a of an upper arm 21 and one end 22a of a lower arm 22 for movement in a vertical direction. The upper arm 21 and the lower arm 22 are arranged next to each other in the vertical direction to extend parallel to each other. The other end 22b of the lower arm 22 is supported by a pillar 23 extending upward from a rim portion of the fixed conduit 32, while a mid portion 21 b of the upper arm 21 is supported by the pillar 23. Each of the other end 22b and the mid portion 21b has a fulcrum 21 c, 22c. The upper arm 21 and the lower arm 22 are pivotable about the respective fulcrums 21 c, 22c under a condition that the relationships in position between the upper and lower arms 21, 22 extending parallel to each other are maintained. The other end 21d of the upper arm 21 is connected to one end 24a of an arm 24 which is movable vertically through a connecting member 27. The other end 24b of the arm 24 is connected to an output shaft 26a of the actuator 26 through a coupling member 25. The coupling member 25 extends in a radial direction of the output shaft 26a. Therefore, the other end 24b of the arm 24 is spaced apart from the output shaft 26a of the actuator 26 in the radial direction.

An operation of the intake conduit length varying mechanism 14 will be described. When the output shaft 26a of the actuator 26 rotates in its right direction to raise the arm 24 upward (in the direction indicated by the mark A of FIG. 3), the upper arm 21 and the lower arm 22 pivot downward about the respective fulcrums 21c, 22c. As a result, the movable conduit 31 moves downward to be placed at the connected position Y. On this occasion, the intake conduit length is set to the length L1 (hereunder called "the length of connection") that is made by adding the lengths of the movable conduit 31 and the fixed conduit 32. On the other hand, when the output shaft 26a of the actuator 26 rotates in its reverse direction to lower the arm 24 downward (in the direction indicated by the mark B of FIG. 4), the upper arm 21 and the lower arm 22 pivot upward about the respective fulcrums 21c, 22c. As a result, the movable conduit 31 moves upward to be placed at the disconnected position X. On this occasion, the length of the movable conduit 31 is no longer included in the intake conduit length. The intake conduit length is thus set to the length L2, (hereunder called "the length of disconnection") that is shorter than the length of connection L1. Additionally, in accordance with processes executed by the control section 11 which will be describe later, the movable conduit 31 is placed at the disconnected position X when the engine load is high such as, for example, when the vehicle is accelerated, and the movable conduit 31 is placed at the connected position Y when the engine load is low.

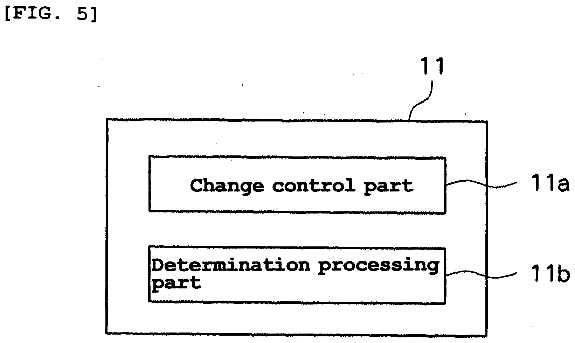

The processes executed by the control section 11 will be described below. FIG. 5 is a functional block diagram showing the processes executed by the control section 11. As shown in FIG. 5, the control section 11 includes a change control part 11 a and a determination processing part 11 b.

The change control part 11 a executes processes for changing the intake conduit length between the length of connection L1 and the length of disconnection L2 in response to a determination result of the determination processing part 11 b to be described later. Specifically, if a running state of the vehicle is determined to correspond to a predetermined condition (hereunder called "change condition") in processes of the determination processing part 11 b, to be described later, the change control part 11 a executes processes to move the movable conduit 31 from the connected position Y to the disconnected position X. Also, if the running state is determined to not to correspond to the change condition in the processes of the determination processing part 11 b, the change control part 11 a executes processes to move the movable conduit 31 from the disconnected position X to the connected position Y. The processes for changing the intake conduit length are executed, for example, as follows:
A position detecting sensor (for example, a potentiometer) for detecting a position of the movable conduit 31 is previously disposed in the intake conduit length varying mechanism 14. The change control part 11 a outputs a signal commanding a drive of the actuator 26 to the actuator drive circuit 13 while detecting the position of the movable conduit 31 based upon a signal inputted from the position detecting sensor. When the movable conduit 31 reaches the connected position Y or the disconnected position X, the change control section 11 a stop outputting the signal to the actuator drive circuit 13 to stop driving the actuator 26.

Also, the change control part 11 a can drive the actuator 26 for a predetermined period of time to move the movable conduit 31 from the connected position Y to the disconnected position X without detecting the position of the movable conduit 31. In this connection, the predetermined time is a required time for the movable conduit 31 to move from the connected position Y to the disconnected position X or from the disconnected position X to the connected position Y. The predetermined time is set in a production stage or the like of the intake control device 10.

The determination process section 11 b determines whether or not the running state of the vehicle corresponds to the change condition under which the change control part 11 a should change the intake conduit length. Specifically, the determination process section 11 b determines whether or not the engine speed has exceeded the predetermined engine speed threshold value by detecting the engine speed on the basis of the signal inputted from the crank angle sensor 57. In case the engine speed has exceeded the engine speed threshold value, the determination process section 11 b determines that the running state of the vehicle meets the change condition. As a result, the above-described change control part 11 a moves the movable conduit 31 to the disconnected position X to set the intake conduit length to the length of disconnection L2. On the other hand, in case the engine speed has not exceeded the engine speed threshold value, the determination process section 11 b determines that the running state of the vehicle does not meet the change condition, and the change control part 11a moves the movable conduit 31 to the connected position Y to set the intake conduit length to the length of connection L1.

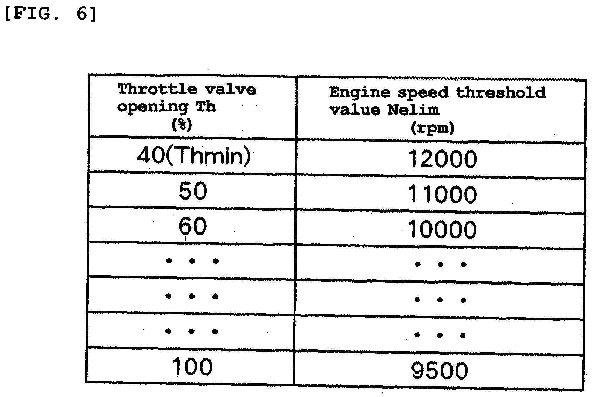

It is also possible to set the engine speed threshold value corresponding to the throttle valve opening. FIG. 6 shows an example table (hereunder called "threshold value table") of making correspondence between the engine speed threshold value Nelim and throttle valve opening Th. The table is stored beforehand for example in the storage section 12. In the threshold value table shown in the figure, the engine speed threshold value Nelim is set to decrease as the throttle valve opening Th increases, or as the intake air amount of the engine 50 increases. Of the throttle valve opening Th to which the engine speed threshold value Nelim is made to correspond, the smallest Thmin (hereunder called "minimum throttle valve opening for change") is stored in the uppermost stage in the threshold value table. In case such a table is stored in the storage section 12, the determination process with the determination process section 11 b is implemented as follows.

The determination process section 11b, at specified sampling intervals, detects the throttle valve opening Th on the basis of signals outputted from the throttle position sensor 48 and also detects the engine speed on the basis of signals outputted from the crank angle sensor 57. The determination process section 11 b also refers to the threshold value table to acquire the engine speed threshold value Nelim corresponding to the throttle valve opening Th and to determine whether or not the detected engine speed has exceeded the engine speed threshold value Nelim. Here, in case the engine speed has exceeded the engine speed threshold value Nelim, the determination process section 11 b determines that the change condition is met. As a result, the intake conduit length is set to the length of disconnection L2 by the process with the change control part 11 a. On the other hand, in case the change condition is not met, the intake conduit length is set to the length of connection L1 by the process with the change control part 11a.

Incidentally, the determination process section 11 b may implement the process of calculating the engine speed threshold value Nelim on the basis of the throttle valve opening Th detected with the throttle position sensor 48 in the process of acquiring the engine speed threshold value Nelim. For example, in case the detected throttle valve opening Th (for example 45%) is not stored in the threshold value table, the determination process section 11 b refers to the threshold value table to obtain two throttle valve openings (40% and 50% in the example shown in FIG. 6) out of a plural number of throttle valve openings Th, stored in the threshold value table, so that the detected throttle valve opening falls between the two throttle valve openings obtained. Then, on the basis of the two throttle valve openings Th and engine speed threshold values Nelim (12000 rpm and 11000 rpm here) made to correspond to the two throttle valve openings on the threshold value table, an engine speed threshold value Nelim corresponding to the detected throttle valve opening Th (45% in this example) is calculated.

Here, the engine speed threshold value Nelim is described in detail. The engine speed threshold value Nelim is the value determined on the basis of both the engine output torque in the state of the intake conduit length set to the above-described length of connection L1 and the engine output torque in the state of the intake conduit length set to the above-described length of disconnection L2. To be more specific, the engine speed threshold value Nelim is preset to an engine speed of the moment at which the difference between the engine output torque in the state of the intake conduit length set to the length of connection L1 and the engine output torque in the state of the intake conduit length set to the length of disconnection L2 is smaller than a specified value.

For example, the engine speed threshold value Nelim is preset to an engine speed of the moment at which the engine output torque in the state of the intake conduit length set to the length of connection L1 is equal to the engine output torque in the state of the intake conduit length set to the length of disconnection L2. In that case, it is possible to improve ride comfort when the engine speed becomes the engine speed threshold value Nelim while the vehicle is running, as the change in the output torque due to changing the intake conduit length decreases.

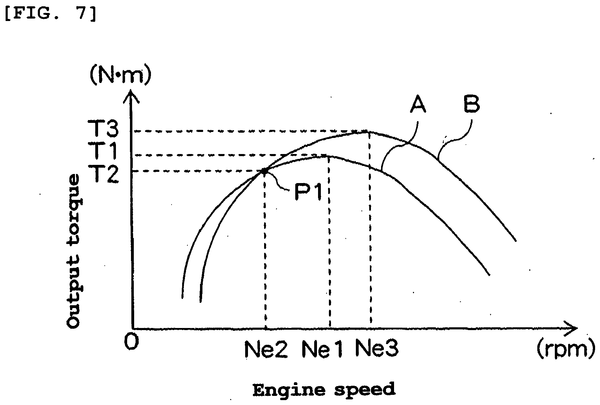

FIG. 7 is an example graph of relationship between the engine speed and the engine output torque. In the figure, the curve A is an example torque curve (a curve showing the change in the engine output torque) with the intake conduit length set to the length of connection L1. The curve B is an example torque curve with the intake conduit length set to the length of disconnection L2. Here, it is assumed that the throttle valve opening Th is set to any constant value.

As shown on the torque curve A in the figure, in the state of the intake conduit length set to the length of connection L1, as the engine speed increases from the minimum value (for example an idling engine speed in the state of the intake conduit length set to the length of connection L1), the output torque (hereunder called "connected state output torque") also increases. The connected state output torque reaches the maximum value T1 at the engine speed Ne1. Thereafter, the connected state output torque decreases with the increase in the engine speed.

On the other hand, in the state of the intake conduit length set to the length of disconnection L2 too, as shown on the torque curve B, as the engine speed increases from the minimum value (for example an idling engine speed in the state of the intake conduit length set to the length of disconnection L2), the output torque (hereunder called "disconnected state output torque") also increases. The torque curve B intersects the torque curve A at the point P of intersection. In other words, the disconnected state output torque becomes T2 at an engine speed Ne2 to be equal to the connected state output torque at the engine speed Ne2. Here, the engine speed Ne 2 is a value lower than the engine speed Ne1. In the process of increase in the connected state output torque, the disconnected state output torque becomes equal to the connected state output torque. Also thereafter, the disconnected state output torque increases with the increase in the engine speed to reach the maximum value T3 at an engine speed Ne3.

When the engine output characteristic is expressed in such a torque curve, the engine speed threshold value Nelim is obtained and the change condition is set for example as follows. First, the engine output characteristic (output torque corresponding to the engine speed) in the state of the intake conduit length set to the length of connection L1 (here, in the state of the movable conduit 31 in the connected position Y) is measured to obtain for example the torque curve A shown in FIG. 7 (first measuring step). The engine output characteristic is measured also in the state of the intake conduit length set to the length of disconnection L2 (here, in the state of the movable conduit 31 in the disconnected position X) to obtain for example the torque curve B shown in FIG. 7 (second measuring step).

Next, the engine speed threshold value Nelim is determined on the basis of both the output characteristic in the state of the intake conduit length set to the length of connection L1 and the output characteristic in the state of the intake conduit length set to the length of disconnection L2 (threshold value determining step). For example, as described above, an engine speed (in FIG. 7, the engine speed Ne2), at which the connected state output torque becomes equal to the disconnected state output torque, is obtained and specified as the engine speed threshold value Nelim, and then stored in the storage section 12 (setting step).

While the above description is based on the assumption that the throttle valve opening is set to any constant value, the engine speed threshold value Nelim corresponding to each throttle valve opening may be determined with the method described so far. Specifically, the torque curve A when the intake conduit length is set to the length of connection L1 and the torque curve B when the intake conduit length is set to the length of disconnection L2 are obtained at a throttle valve opening Thi. Then, the engine speed at the point of intersection of the torque curve A and the torque curve B may be made the engine speed threshold value Nelim at the throttle valve opening Thi. After that, the engine speed threshold value Nelim corresponding to each throttle valve opening may be obtained by sequentially increasing or decreasing the throttle valve opening Thi.

It is also possible, in the state of the throttle valve opening set to any constant value, to obtain the engine speed threshold value Nelim with the above-described method, and to calculate the engine speed threshold value Nelim corresponding to each throttle valve opening using a predetermined equation.

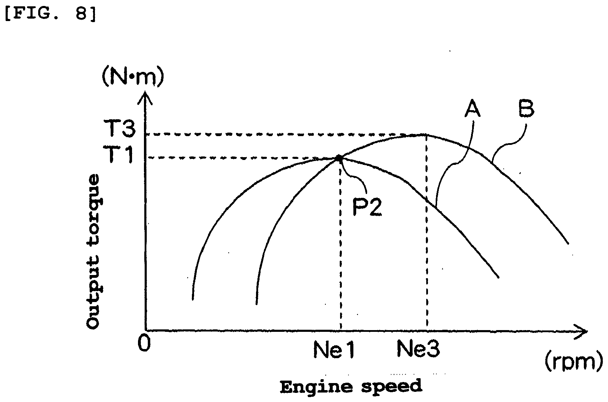

It is also possible to determine the form or the like (for example the lengths and diameters of the movable conduit 31 and the fixed conduit 32) of the intake conduit length varying mechanism 14 so that the connected state output torque of the torque curve A is equal to the disconnected state output torque of the torque curve B at the engine speed Ne1, at which the connected state output torque becomes the maximum value T1 as shown in the graph of FIG. 8. In that case, it is possible to set the engine speed Ne1, at the point where the connected state output torque becomes the maximum value T1, as the engine speed threshold value Nelim.

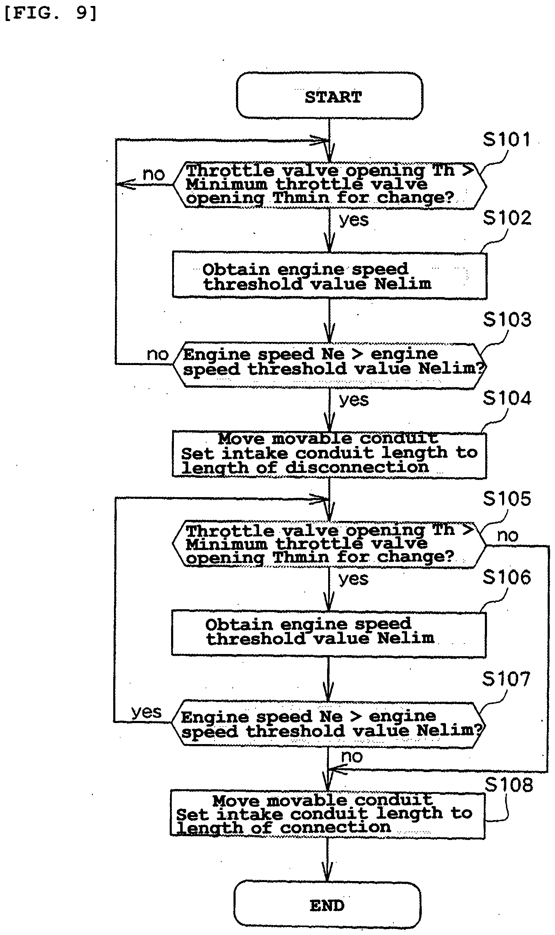

Here, the process flow the control section 11 implements is described. FIG. 9 is a flowchart showing an example of processes implemented by the control section 11. Incidentally, the description of the example here assumes that the change condition includes the fact that the throttle valve opening Th is in excess of the above-described minimum throttle valve opening Thminr for change. The description also assumes that the movable conduit 31 is disposed beforehand in the connected position Y.

First, the determination process section 11 b detects the throttle valve opening Th to determine whether or not the throttle valve opening Th is greater than the minimum throttle valve opening Thminr for change (S101). In case the throttle valve opening Th is smaller than the minimum throttle valve opening Thminr for change, the process of S101 is implemented until the throttle valve opening Th exceeds the minimum throttle valve opening Thminr for change.

In case the determination of S101 results in that the throttle valve opening Th is greater than the minimum throttle valve opening Thlim for changing, the determination process section 11 b obtains the engine speed threshold value Nelim corresponding to the detected throttle valve opening Th (S102). For example, as described above, the determination process section 11 b obtains the engine speed threshold value Nelim on the basis of the threshold value table and preset equation. The determination process section 11 b detects the engine speed Ne on the basis of the signals inputted from the crank angle sensor 57, and determines whether or not the engine speed Ne is greater than the engine speed threshold value Nelim (S103). In case the engine speed Ne is not greater than the engine speed threshold value Nelim, the process step goes back to S101 to repeat the process step thereafter.

On the other hand, in case the detected engine speed Ne is greater than the engine speed threshold value Nelim, the determination process section 11 b determines that the running state of the vehicle meets the change condition. As a result, the change control part 11 a moves the movable conduit 31 to the disconnected position X to set the intake conduit length to the length of disconnection L2 (S104).

After that, the determination process section 11 b detects again the throttle valve opening Th and determines whether or not the throttle valve opening Th is greater than the minimum throttle valve opening Thminr for change (S105). In case the throttle valve opening Th is not greater than the minimum throttle valve opening Thminr for change, the determination process section 11 b determines that the running state of the vehicle does not meet the change condition any more. As a result, the change control part 11 a moves the movable conduit 31 again to the connected position Y to set the intake conduit length to the length of connection L1 (S108).

On the other hand, in case the determination result in S105 shows that the throttle valve opening Th is greater than the minimum throttle valve opening Thminr for change, the determination process section 11 b obtains the engine speed threshold value Nelim corresponding to the throttle valve opening Th detected in S105 (S106). Then, the determination process section 11 b detects again the engine speed Ne and determines whether or not the engine speed Ne is greater than the engine speed threshold value Nelim (S107). In case the engine speed Ne is still greater than the engine speed threshold value Nelim, the process step goes back to S105 to implement again the process thereafter.

On the other hand, in case the determination result in S107 shows that the engine speed Ne is not greater than the engine speed threshold value Nelim, the determination process section 11 b determines that the running state of the vehicle does not meet the change condition any more. As a result, the change control part 11 a moves the movable conduit 31 again to the connected position Y to set the intake conduit length to the length of connection L1 (S108). The control section 11 repeats the above process while the vehicle is running.

In the flowchart shown in FIG. 9, in the process steps (from S105 to S107) of determining whether or not to return the intake conduit length from the length of disconnection L2 to the length of connection L1, the determining process section 11b obtains the engine speed threshold value Nelim corresponding to the detected throttle valve opening Th (S106) to determine whether or not the detected engine speed Ne is greater than the engine speed threshold value Nelim (S107), as already described above. However, it is also possible to determine in S107 whether or not the engine speed Ne is greater than a predetermined constant threshold value without obtaining the engine speed threshold value Nelim corresponding to the detected throttle valve opening Th. So, if the engine speed Ne is not greater than the predetermined constant threshold value, the running state of the vehicle can be determined not to meet the change condition any more.

With the intake control device 10 described above, because the engine speed threshold value Nelim is the value determined on the basis of both the engine output torque in the state of the intake conduit length set to the length of connection L1 and the engine output torque in the state of the intake conduit length set to the length of disconnection L2, it is possible to restrict an abrupt change in the output torque, and allow comfortable driving even when the intake conduit length is changed.

The present teaching is not limited to the above intake control device 10, but various modifications are possible. For example, while the engine speed threshold value Nelim is stored in the threshold value table in the storage section 12 as shown in FIG. 6 in the intake control device 10, it is also possible for example to store an equation expressing the correlation between the throttle valve opening Th and the engine speed threshold value Nelim in the storage section 12. Then, the control section 11 may put the throttle valve opening Th detected with the throttle position sensor 48 into the equation to calculate the engine speed threshold value Nelim.

Further, the intake conduit length varying mechanism 14 provided in the intake control device 10 changes the intake conduit length by connecting the movable conduit 31 to the fixed conduit 32 or disconnecting the movable conduit 31 from the fixed conduit 32. Alternatively, for example, the intake conduit length varying mechanism may be provided with a plural number of intake passages as intake conduits through which air to be supplied to the engine flows, and valves may be provided in the plural number of intake passages. In that case, the control section may change the intake conduit length by opening or closing the valves according to engine load or the like.

The description above discloses (amongst others), in order to solve the problem discussed above, an embodiment of an intake control device which includes change control means for changing a length of an intake conduit from a predetermined first length to a second length shorter than the first length, and from the second length to the first length, according to whether or not an engine speed has reached a predetermined threshold value, in which the threshold value is predetermined on the basis of both an engine output torque in the state of the length of the intake conduit set to the first length and an engine output torque in the state of the length of the intake conduit set to the second length.

Also, in order to solve the problem discussed above, a straddle type vehicle according to the present teaching has the intake control device mounted thereto.

According to the present teaching, an abrupt change in the engine output torque is restricted when the length of the intake conduit is changed, so that ride comfort at the time of changing is improved.

In accordance with one mode of the present teaching, the threshold value may be predetermined on the basis of an engine speed at which the engine output torque in the state of the length of the intake conduit set to the first length is equal to the engine output torque in the state of the length of the intake conduit set to the second length. According to this mode, an abrupt change in the engine output torque is restricted when the length of the intake conduit is changed, so that ride comfort at the time of changing is improved.

In accordance with another mode of the present teaching, the threshold value is predetermined to correspond to a throttle valve opening. Further, a throttle valve opening detecting means for detecting the throttle valve opening is provided. The change control means may change the length of the intake conduit between the first length and the second length depending on whether or not the engine speed has reached the threshold value corresponding to the throttle valve opening detected with the throttle valve opening detecting means. This mode makes it possible to change the length of the intake conduit at an appropriate engine speed corresponding to throttle operation.

In accordance with still another mode of the present teaching, the threshold value is predetermined on the basis of the engine speed of the moment at which the engine output torque measured corresponding to the engine speed in the state of the length of the intake conduit set to the first length is equal to the engine output torque measured corresponding to the engine speed in the state of the length of the intake conduit set to the second length. According to this mode, an abrupt change in the engine output torque is restricted when the length of the intake conduit is changed, so that ride comfort at the time of changing is improved.

The description above further discloses, in order to solve the problem discussed above, an embodiment of a method of setting a change condition for changing a length of an intake conduit in an intake control device between a predetermined first length and a second length shorter than the first length, the method including: a first measuring step of measuring an engine output characteristic corresponding to the engine speed in the state of the length of the intake conduit set to the first length; a second measuring step of measuring the engine output characteristic corresponding to the engine speed in the state of the length of the intake conduit set to the second length; a threshold value determining step of determining the threshold value for an engine speed on the basis of both the engine output characteristic measured in the first measuring step and the engine output characteristic measured in the second measuring step; and a setting step of setting the fact that at least the engine speed reaches the threshold value as a condition for changing the length of the intake conduit.

The present teaching makes it possible, when the length of the intake conduit is changed in the intake control device, to restrict an abrupt change in the engine output torque and improve ride comfort at the time of the changing.

In accordance with still another mode of the present teaching, the threshold value determining step may obtain the engine speed at which the engine output torque in the state of the length of the intake conduit set to the first length is equal to the engine output torque in the state of the length of the intake conduit set to the second length, and determine the threshold value on the basis of the obtained engine speed. According to this mode, an abrupt change in the engine output torque is restricted when the length of the intake conduit is changed in the intake control device, so that ride comfort at the time of changing is improved.

The description above further discloses, according to a first preferred aspect, an intake control device comprising: change control means for changing a length of an intake conduit from a predetermined first length to a second length shorter than the first length, and from the second length to the first length, according to whether or not an engine speed has reached a predetermined threshold value, wherein the threshold value is predetermined on the basis of an engine output torque in the state of the length of the intake conduit set to the first length and an engine output torque in the state of the length of the intake conduit set to the second length.

Further, according to a second preferred aspect, the threshold value is predetermined on the basis of an engine speed at which the engine output torque in the state of the length of the intake conduit set to the first length is equal to the engine output torque in the state of the length of the intake conduit set to the second length.

Further, according to a third preferred aspect, the threshold value is predetermined to correspond to a throttle valve opening, a throttle valve opening detecting means for detecting the throttle valve opening is further provided, and the change control means changes the length of the intake conduit between the first length and the second length depending on whether or not the engine speed has reached the threshold value corresponding to the throttle valve opening detected with the throttle valve opening detecting means.

Further, according to a fourth preferred aspect, the threshold value is predetermined on the basis of the engine speed of the moment at which the engine output torque measured corresponding to the engine speed in the state of the length of the intake conduit set to the first length is equal to the engine output torque measured corresponding to the engine speed in the state of the length of the intake conduit set to the second length.

The description further discloses a straddle type vehicle provided with the intake control device according to the above first to fourth embodiments.

The description above still further discloses, according to a sixth preferred aspect, a method of setting a condition for changing a length of an intake conduit in an intake control device between a predetermined first length and a second length shorter than the first length, the method comprising: a first measuring step of measuring an engine output characteristic corresponding to the engine speed in the state of the length of the intake conduit set to the first length; a second measuring step of measuring the engine output characteristic corresponding to the engine speed in the state of the length of the intake conduit set to the second length; a threshold value determining step of determining the threshold value for an engine speed on the basis of the engine output characteristic measured in the first measuring step and the engine output characteristic measured in the second measuring step; and a setting step of setting the fact that at least the engine speed reaching the threshold value as a condition for changing the length of the intake conduit.

Further, according to a seventh preferred aspect, the threshold value determining step obtains the engine speed at which the engine output torque in the state of the length of the intake conduit set to the first length is equal to the engine output torque in the state of the length of the intake conduit set to the second length, and determines the threshold value on the basis of the obtained engine speed.

The description above still further discloses, in order to provide an intake control device which allows comfortable driving even when the length of an intake conduit is changed, an embodiment of an intake control device which changes an intake conduit length from a predetermined length of connection to a length of disconnection shorter than the length of connection, and vice versa according to whether or not an engine speed has reached a predetermined threshold value. The threshold value is predetermined on the basis of both an engine output torque in the state of the intake conduit length set to the length of connection and an engine output torque in the state of the intake conduit length set to the length of disconnection.

## Claims

1. Intake control device for an engine of a vehicle comprising a change control means (11 a) for changing a length of an intake conduit from a first length (L1) to a second length (L2) shorter than the first length, and from the second length (L2) to the first length (L1), according to whether or not an engine speed has reached a predetermined threshold value (Nelim),
wherein the threshold value (Nelim) applied by the change control means has been predetermined on the basis of an engine output torque in the state of the intake conduit set to the first length (L1) and an engine output torque in the state of the intake conduit set to the second length (L2), a throttle valve opening detecting means is provided for detecting the throttle valve opening, the threshold value (Nelim) has been predetermined to correspond to a throttle valve opening (Th) stored beforehand in a storage section (12), and wherein the change control means (11 a) is configured to change the length of the intake conduit between the first length (L1) and the second length (L2) depending on whether or not the engine speed (Ne) has reached the threshold value (Nelim) based on the throttle valve opening (Th) detected with the throttle valve opening detecting means (48), **characterized in that** the threshold value (Nelim) is acquired from threshold values stored as a threshold value table beforehand in the storage section (12) corresponding to the throttle valve opening (Th) detected with the throttle valve opening detecting means (48), wherein the engine speed threshold value (Nelim) is set to decrease as the detected throttle valve opening (Th) increases.

2. Intake control device according to claim 1, **characterized in that** the threshold value (Nelim) has been predetermined on the basis of an engine speed, at which the engine output torque in the state of the intake conduit set to the first length (L1) is equal to the engine output torque in the state of the intake conduit set to the second length (L2).

3. Intake control device according to claim 1 or 2, **characterized in that** the threshold value (Nelim) is predetermined on the basis of the engine speed of the moment at which the engine output torque measured corresponding to the engine speed in the state of the length of the intake conduit set to the first length (L1) is equal to the engine output torque measured corresponding to the engine speed in the state of the length of the intake conduit set to the second length (L2).

4. Straddle type vehicle provided with the intake control device according to one of the claims 1 to 3.

5. Method of setting a condition for changing a length of an intake conduit in an intake device for an engine of a vehicle between a first length (L1) and a second length (L2) shorter than the first length (L1) or vice versa, the method comprising:
a first measuring step of measuring an engine output characteristic corresponding to the engine speed in the state of the length of the intake conduit set to the first length (L1);
a second measuring step of measuring the engine output characteristic corresponding to the engine speed in the state of the length of the intake conduit set to the second length (L2);
a threshold value determining step of determining the threshold value (Nelim) for an engine speed on the basis of the engine output characteristic measured in the first measuring step and the engine output characteristic measured in the second measuring step;
a setting step of setting at least the engine speed reaching the threshold value as a condition for changing the length of the intake conduit;
a detecting step of detecting the throttle valve opening, the first and second measuring steps, the threshold value determining step, and the setting step are repeated for several throttle opening degrees to determine the threshold value (Nelim) dependent on changing throttle opening degrees;
a changing step of changing the length of the intake conduit between the first length (L1) and the second length (L2) depending on whether or not the engine speed (Ne) has reached the threshold value (Nelim) determined based on the detected throttle valve opening (Th), **characterized in that** the engine speed threshold value (Nelim) is acquired corresponding to the detected throttle valve opening (Th) and set to decrease as the detected throttle valve opening (Th) increases.

6. Method of setting a condition for changing a length of an intake conduit according to claim 5, **characterized in that** the threshold value determining step obtains the engine speed at which the engine output torque in the state of the length of the intake conduit set to the first length is equal to the engine output torque in the state of the length of the intake conduit set to the second length, and determines the threshold value on the basis of the obtained engine speed.

## Patentansprüche

1. Einlass-Steuervorrichtung für einen Motor eines Fahrzeugs, die umfasst eine Änderungs-Steuereinrichtung (11 a), zur Änderung einer Länge einer Einlass-Leitung von einer ersten Länge (L1) zu einer zweiten Längen (L2), kürzer als die erste Länge, und von der zweiten Länge (L2) zu der ersten Länge (L1), gemäß ob oder nicht eine Motor-Geschwindigkeit einen vorgegebenen Grenzwert (Nelim) erreicht hat,
wobei der Grenzwert (Nelim), aufgebracht durch die Änderungs-Steuereinrichtung, vorgegeben worden ist auf der Basis eines Motor-Abgabemoments, in dem Zustand der Einlass-Leitung, gesetzt zu der ersten Länge (L1), und eines Motor-Abgabemoments in dem Zustand der Einlass-Leitung, gesetzt auf die zweite Länge (L2), eine Drosselklappenöffnungs-Erfassungseinrichtung ist zum Erfassen der Drosselklappenöffnung vorgesehen, der Grenzwert (Nelim) ist vorbestimmt worden, um einer Drosselklappenöffnung (Th) zu entsprechen, vorher in einem Speicherabschnitt (12) gespeichert, und wobei die Änderungs-Steuereinrichtung (11a) konfiguriert ist, um die Länge der Einlass-Leitung zwischen der ersten Länge (L1) und der zweiten Länge (L2) abhängig davon zu ändern, ob oder nicht die Motor-Geschwindigkeit (Ne) den Grenzwert (Nelim) erreicht hat, auf Grundlage der Drosselklappenöffnung (Th), erfasst mit der Drosselklappenöffnungs-Erfassungseinrichtung (48), **dadurch gekennzeichnet, dass** der Grenzwert (Nelim) von Grenzwerten erhalten ist, gespeichert in einem Grenzwert-Tablett vorher in dem Speicherabschnitt (12) gespeichrt, entsprechend zu der Drosselklappenöffnung (Th), erfasst mit der Drosselklappenöffnungs-Erfassungseinrichtung (48), wobei der Motor-Geschwindigkeitsgrenzwert (Nelim) gesetzt ist, sich zu verringern, wenn die erfasste Drosselklappenöffnung (Th) ansteigt.

2. Einlass-Steuervorrichtung gemäß Anspruch 1, **dadurch gekennzeichnet, dass** der Grenzwert (Nelim) vorbestimmt ist, auf der Grundlage einer Motor-Geschwindigkeit zu welcher das Motor-Abgabemoment in einem Zustand der Einlass-Leitung, gesetzt auf die erste Länge (L1), gleich ist zu den Motor-Abgabemoment in dem Zustand der Einlass-Leitung, gesetzt auf die zweite Länge (L2).

3. Einlass-Steuervorrichtung gemäß Anspruch 1 oder 2, **dadurch gekennzeichnet, dass** der Grenzwert (Nelim) vorgegeben ist, auf der Grundlage der Motor-Geschwindigkeit eines Moments, an dem das Motor-Abgabemoment gemessen ist, entsprechend zu der Motor-Geschwindigkeit in dem Zustand der Länge der Einlass-Leitung, gesetzt auf die erste Länge (L1), gleich ist zu dem Motor-Abgabemoment gemessen entsprechend zu der Motor-Geschwindigkeit in dem Zustand der Länge der Einlass-Leitung, gesetzt auf die zweite Länge (L2).

4. Spreiz-Sitz-Typ-Fahrzeug vorgesehen mit der Einlass-Steuervorrichtung gemäß einem der Ansprüche 1 bis 3.

5. Verfahren zum Setzen einer Bedingung zur Änderung einer Länge einer Einlass-Leitung, in einer Einlass-Vorrichtung für einen Motor eines Fahrzeugs, zwischen einer ersten Länge (L1) und einer zweiten Länge (L2), kürzer als die erste Länge (L1), und zurück, das Verfahren umfasst:
einen ersten Mess-Schritt des Messens einer Motorabgabe-Charakteristik,
entsprechend zu der Motor-Geschwindigkeit in dem Zustand der Länge der Einlass-Leitung, gesetzt auf die erste Länge (L1);
einen zweiten Mess-Schritt des Messens der Motorabgabe-Charakteristik,
entsprechend zu der Motor-Geschwindigkeit in dem Zustand der Länge der Einlass-Leitung, gesetzt auf die zweite Länge (L2);
einen Grenzwert-Bestimmungs-Schritt der Bestimmung des Grenzwertes (Nelim) für eine Motor-Geschwindigkeit auf der Grundlage der Motorabgabe-Charakteristik,
gemessen in dem ersten Mess-Schritt, und der Motorabgabe-Charakteristik,
gemessen in dem zweiten Mess-Schritt;
einen Setz-Schritt des Setzen von zumindest der Motor-Geschwindigkeit, welche den ersten Grenzwert erreicht, als eine Bedingung zum Ändern der Länge der Einlass-Leitung;
einen Erfassungs-Schritt des Erfassen einer Drosselklappenöffnung, des ersten und
zweiten Mess-Schritts, des Grenzwert-Bestimmungs-Schrittes und des Setz-Schritts sind für verschiedene Drosselklappenöffnungsgrade wiederholt, um den Grenzwert (Nelim) abhängig von Änderungen der Dosselöffnungsgrade zu bestimmen;
einen Änderungs-Schritt des Änderns der Länge der Einlass-Leitung zwischen der ersten Länge (L1) und der zweiten Länge (L2) abhängig davon, ob oder nicht die Motor-Geschwindigkeit (Ne) den Grenzwert (Nelim), bestimmt auf Grundlage der erfassten Drosselklappenöffnung (Th), erreicht hat, **dadurch gekennzeichnet, dass** der Motor-Geschwindigkeitsgrenzwert (Nelim) erhalten ist entsprechend zu der erfassten Drosselklappenöffnung (Th) und gesetzt ist sich zu verringern, wenn die erfasste Drosselklappenöffnung (Th) zunimmt.

6. Verfahren zum Setzen einer Bedingung zur Änderung einer Länge einer Einlass-Leitung gemäß Anspruch 5, **dadurch gekennzeichnet, dass** der Grenzwert-Bestimmungs-Schritt die Motor-Geschwindigkeit erhält, bei welcher das Motor-Abgabemoment in dem Zustand der Länge der Einlass-Leitung, gesetzt auf die erste Länge, gleich ist zu dem Motor-Abgabemoment in dem Zustand der Länge der Einlass-Leitung, gesetzt auf die zweite Länge, und bestimmt den Grenzwert auf der Grundlage der erhaltenen Motor-Geschwindigkeit.

## Revendications

1. Dispositif de commande d'admission pour un moteur de véhicule comprenant un moyen de commande de changement (11a) pour changer une longueur d'un conduit d'admission depuis une première longueur (L1) vers une seconde longueur (L2) plus courte que la première longueur, et depuis la seconde longueur (L2) vers la première longueur (L1), selon le fait ou non qu'une vitesse de moteur a atteint une valeur seuil prédéterminée (Nelim),
la valeur seuil (Nelim) appliquée par le moyen de commande de changement ayant été prédéterminée sur la base d'un torque de puissance de sortie du moteur sous l'état du conduit d'admission paramétré sur la première longueur (L1) et d'un torque de puissance de sortie du moteur sous l'état du conduit d'admission paramétré sur la seconde longueur (L2), un moyen de détection de l'ouverture d'une soupape d'accélérateur étant prévu pour la détection de l'ouverture d'une soupape d'accélérateur, la valeur seuil (Nelim) ayant été prédéterminée pour correspondre à une ouverture de soupape d'accélérateur (Th) enregistrée à l'avance dans une section de stockage (12), et le moyen de commande de changement (11a) étant configuré pour changer la longueur du conduit d'admission entre la première longueur (L1) et la seconde longueur (L2) en fonction du fait ou non que la vitesse du moteur (Ne) a atteint la valeur seuil (Nelim) sur la base de l'ouverture de soupape d'accélérateur (Th) détectée avec le moyen de détection d'ouverture de soupape d'accélérateur (48), **caractérisé en ce que** la valeur seuil (Nelim) est acquise à partir des valeurs seuils stockées sous la forme d'un tableau de valeurs seuils à l'avance dans la section de stockage (12) correspondant à l'ouverture de soupape d'accélérateur (Th) détectée avec le moyen de détection d'ouverture de soupape d'accélérateur (48), la valeur seuil de la vitesse de moteur (Nelim) étant paramétrée pour baisser lorsque l'ouverture détectée de soupape d'accélérateur (Th) augmente.

2. Dispositif de commande d'admission selon la revendication 1, **caractérisé en ce que** la valeur seuil (Nelim) a été prédéterminée sur la base d'une vitesse de moteur, à laquelle le torque de puissance de sortie du moteur sous l'état du conduit d'admission paramétré sur la première longueur (L1) est égal au torque de puissance de sortie du moteur sous l'état du conduit d'admission paramétré sur la seconde longueur (L2).

3. Dispositif de commande d'admission selon la revendication 1 ou 2, **caractérisé en ce que** la valeur seuil (Nelim) est prédéterminée sur la base de la vitesse de moteur du moment auquel le torque de puissance de sortie du moteur mesuré correspondant à la vitesse de moteur sous l'état de la longueur du conduit d'admission paramétré sur la première longueur (L1) est égal au torque de puissance de sortie du moteur mesuré correspondant à la vitesse de moteur sous l'état de la longueur du conduit d'admission paramétré sur la seconde longueur (L2).

4. Véhicule de type à selle muni du dispositif de commande d'admission selon l'une quelconque des revendications 1 à 3.

5. Procédé de paramétrage d'une condition de changement d'une longueur d'un conduit d'admission dans un dispositif d'admission pour un moteur d'un véhicule entre une première longueur (L1) et une seconde longueur (L2) plus courte que la première longueur (L1) ou vice versa, le procédé comprenant :
une première étape de mesure pour la mesure d'une caractéristique de puissance de sortie du moteur correspondant à la vitesse de moteur sous l'état de la longueur du conduit d'admission paramétré sur la première longueur (L1) ;
une seconde étape de mesure pour la mesure de la caractéristique de puissance de sortie du moteur correspondant à la vitesse de moteur sous l'état de la longueur du conduit d'admission paramétré sur la seconde longueur (L2) ;
une étape de détermination de la valeur seuil pour la détermination de la valeur seuil (Nelim) pour une vitesse de moteur sur la base de la caractéristique de puissance de sortie du moteur mesurée dans la première étape de mesure et de la caractéristique de puissance de sortie du moteur mesurée dans la seconde étape de mesure ;
une étape de paramétrage pour le paramétrage d'au moins la vitesse de moteur atteignant la valeur seuil comme condition de changement de la longueur du conduit d'admission ;
une étape de détection pour la détection de l'ouverture de soupape d'accélérateur, la première et la seconde étapes de mesure, l'étape de détermination de la valeur seuil, et l'étape de paramétrage étant répétées pour plusieurs degrés d'ouverture d'accélérateur pour déterminer la valeur seuil (Nelim) en fonction du changement des degrés d'ouverture d'accélérateur ;
une étape de changement pour le changement de la longueur du conduit d'admission entre la première longueur (L1) et la seconde longueur (L2) en fonction du fait ou non que la vitesse de moteur (Ne) a atteint la valeur seuil (Nelim) déterminée sur la base de l'ouverture détectée de soupape d'accélérateur (Th), **caractérisé en ce que** la valeur seuil de vitesse de moteur (Nelim) est acquise correspondant à l'ouverture détectée de soupape d'accélérateur (Th) et paramétrée pour baisser lorsque l'ouverture détectée de soupape d'accélérateur (Th) augmente.

6. Procédé de paramétrage d'une condition de changement d'une longueur d'un conduit d'admission selon la revendication 5, **caractérisé en ce que** l'étape de détermination de la valeur seuil atteint la vitesse de moteur à laquelle le torque de puissance de sortie du moteur sous l'état de la longueur du conduit d'admission paramétré sur la première longueur est égal au torque de puissance de sortie du moteur sous l'état de la longueur du conduit d'admission paramétré sur la seconde longueur, et détermine la valeur seuil sur la base de la vitesse obtenue du moteur.
